# NEUE EUROPÄISCHE PATENTSCHRIFT

(11) **EP 0 841 378 B2**
(45) Veröffentlichungstag und Bekanntmachung des Hinweises auf die Entscheidung über den Einspruch: **30.05.2007**
(45) Hinweis auf die Patenterteilung: 09.08.2000
(21) Anmeldenummer: 97118216.7
(22) Anmeldetag: 21.10.1997
(51) Int. Cl.: C09B 67/26, C09B 69/04, C09D 11/00, C09B 67/22

(54) **Verwendung von wässrigen, konzentrierten, einen Disazofarbstoff enthaltenden Lösungen im Ink-Jet-Verfahren sowie Disazofarbstoffe**
Use of aqueous concentrated solutions of a salt of a disazo dye in the ink-jet process as the disazo dye salt
Utilisation de solutions concentrées aqueuses d'un sel de colorant disazoique dans le procédé à jet d'encre, ainsi que le sel de colorant disazoique

(30) Priorität: 07.11.1996 DE 19645775
(43) Veröffentlichungstag der Anmeldung: 13.05.1998
(73) Patentinhaber: BASF Aktiengesellschaft, 67056 Ludwigshafen (DE)
(72) Erfinder: Bermes, Rudolf, Dr., 67069 Ludwigshafen (DE)

(56) Entgegenhaltungen:
- EP-A- 0 035 152
- EP-A- 0 270 003
- EP-A- 0 585 659
- DE-A- 4 227 591
- GB-A- 2 164 348
- JP-A- 4 168 166
- US-A- 2 490 703
- US-A- 4 118 182

## Beschreibung

Die vorliegende Erfindung betrifft die Verwendung von wässrigen, flüssigen Farbstoffkonzentraten, die 15 bis 35 Gew.-%, bezogen auf das Gewicht des Konzentrats an Farbstoff enthalten, wobei 90 bis 100 Gew.-% der Farbstoffmenge aus dem Farbstoff der Formel I 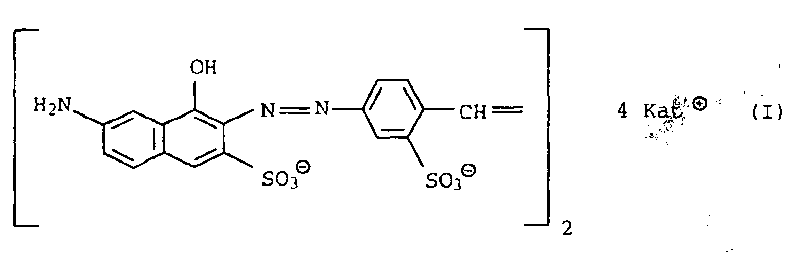 bestehen, in der Kat^{⊕} das Äquivalent eines tertiären Alkylalkanolammoniumkations bedeutet, im Ink-Jet-Verfahren.

Ink-Jet-Verfahren sind an sich bekannt. Dabei werden Tröpfchen einer Schreibflüssigkeit (Tinte) aus einer oder mehreren kleinen Düsen gezielt auf einen Träger, z. B. auf Papier, Holz, Textilien, Kunststoff oder Metall, geschossen. Durch elektronische Aussteuerung werden die einzelnen Tröpfchen zu Schriftzeichen oder graphischen Mustern zusammengefaßt.

Aus der US-A-4 118 182 sind wäßrige Farbstofflösungen bekannt, die neben dem Farbstoffanion entsprechend der obigen Formel, dessen Diazokomponente 4,4'-Diaminostilben-2,2'-disulfonsäure (Flavonsäure) und dessen Kupplungskomponente 1-Hydroxy-7-aminonaphthalin-3-sulfonsäure (γ-Säure) ist, gleichzeitig noch einen Farbstoff mit identischer Diazokomponente aber mit 1-Hydroxy-8-aminonaphthalin-3,6-disulfonsäure (H-Säure) als Kupplungskomponente aufweisen. Da die Synthese dort durch Mischkupplung erfolgt, ist als dritter Farbstoff zusätzlich ein Produkt enthalten, das als Kupplungskomponente sowohl γ-Säure als auch H-Säure aufweist.

In der EP-A-13 750 und der EP-A-270 003 werden weiterhin Syntheselösungen beschrieben, die den Farbstoff der Formel I mit anderen Kationen enthalten.

Die wäßrige Reaktionslösung, die in der EP-A-13 750 beschrieben ist, weist einen hohen Fremdsalzanteil auf und wird mit einem weiteren Diazoniumsalz zu einem Polyazofarbstoff umgesetzt.

Die Reaktionslösung, die in der EP-A-270 003 beschrieben ist, muß anschließend noch gemäß der dort gegebenen Lehre mit einem gelben Farbstoff versetzt werden, um so zu einer vollwertigen flüssigen Schwarzmischung zu gelangen.

Weiterhin ist aus der EP-A 585 659 bekannt, daß man Farbstoffe der allgemeinen Formel I mit Metall- und Ammoniumkationen für das Ink-Jet-Verfahren verwenden kann. Es hat sich jedoch gezeigt, daß Farbstoffe mit MetallKationen (Na, Li, K) und auch NH₄⊕ bezüglich der Löslichkeit in Wasser zu wünschen übrig lassen und daß selbst das Triethanolammoniumkation nur unter Zuhilfenahme eines Cosolvens ausreichend stabile konzentrierte Farbstofflösungen ergibt. Ein solches Cosolvens ist z. B. Harnstoff, der aber im Markt unerwünscht ist.

Aufgabe der vorliegenden Erfindung war es daher, flüssige Farbstoffkonzentrate bereitzustellen, die sich vorteilhaft im Ink-Jet-Verfahren eignen, dabei über günstige anwendungstechnische Eigenschaften, insbesondere über eine gute Lichtechtheit, Wasserechtheit und Abriebechtheit verfügen und die möglichst ohne Cosolvens genügend hohe Farbstoffkonzentrationen in Wasser ermöglichen.

Demgemäß wurde gefunden, daß sich die eingangs näher bezeichneten Farbstoffe der Formel vorteilhaft zur Herstellung von Konzentraten für das Ink-Jet-Verfahren eignen.

Für das Bedrucken eines Substrats werden die Konzentrate zu einer Tinte verdünnt.

Wie oben bereits ausgeführt, besteht der Farbstoff im wesentlichen, d.h. zu 90 bis 100 Gew.-%, vorzugsweise 95 bis 100 Gew-%, jeweils bezogen auf die Farbstoffmenge, aus dem Farbstoff der Formel I.

Zusätzlich können noch 0 bis 10 Gew.-%, vorzugsweise 0 bis 5 Gew.-%, jeweils bezogen auf die Farbstoffmenge, eines oder mehrerer Nuancierfarbstoffe, z.B. C.I. Acid Yellow 23 (19 140), C.I. Acid Blue 9 (42 090), C.I. Direct Red 254, C.I. Direct Blue 86 (74 180), C.I. Reactive Red 24, C.I. Reactive Blue 49, C.I. Reactive Red 72 oder die Farbsäure des Umsetzungsproduktes von tetrazotierter Flavonsäure mit 1-Amino-8-hydroxynaphthalin-3,6-disulfonsäure oder 2-Hydroxy-3-methylbenzoesäure jeweils im Molverhältnis 1:2, vorhanden sein.

Tertiäre Alkylalkanolammoniumkationen Kat⊕ leiten sich z. B. von den Aminen Methyl-, Ethyl-, Propyl- oder Butyldiethanolamin oder Dimethyl-, Diethyl-, Dipropyl- oder Dibutylethanolamin ab, wobei beispielsweise Diethylethanolamin und Butyldiethanolamin bevorzugt sind.

Ein Teil der genannten Amine kann auch durch andere tertiäre Amine wie Triethanolamin oder Triisopropanolamin ersetzt werden.

Die erfindungsgemäß anwendbaren Konzentrate haben eine vorzügliche Kältestabilität und enthalten in der Regel 15 bis 35 % vorzugsweise 20 bis 30 % Farbstoffe der Formel I, der Rest besteht aus Wasser und einem geringen Anteil an Neopentylglykol, wenn die Herstellung des Farbstoffes durch Diazotierung mit Neopentylglykoldinitrit vorgenommen wurde. Üblicherweise ist auch noch ein Anteil an den den Kat⊕ zugrundeliegenden Aminen vorhanden, da diese bezogen auf die Sulfonsäuregruppen der Farbstoffe der Formel I im Überschuß verwendet werden. In der Regel beträgt der Überschuß 10 bis 50 %. Man kann den Farbstoffkonzentraten natürlich noch Lösungsmittel zusetzen, erforderlich ist dies jedoch nicht. Zur Herstellung der Ink-Jet-Tinten werden die Konzentrate nach den Rezepten der Tintenhersteller verdünnt.

Die erfindungsgemäß zur Anwendung kommenden Farbstoffkonzentrate sollen im wesentlichen frei sein von Fremdsalzen. Dies bedeutet im erfindungsgemäßen Sinn, daß sie gegebenenfalls noch untergeordnete Mengen, beispielsweise 0 bis 10 Gew.-%, vorzugsweise 0 bis 5 Gew.-% und insbesondere < 1 Gew.-%, jeweils bezogen auf das Gewicht der Präparation, an Fremdsalzen enthalten.

Unter Fremdsalzen sind in diesem Zusammenhang in der Regel solche Salze zu verstehen, die bei der Synthese (Azokupplung) der Farbstoffe der Formel I eingeschleppt werden.

Die erfindungsgemäß anwendbaren Farbstoffkonzentrate können z.B. erhalten werden, indem man Flavonsäure mit Salpetrigsäureestern diazotiert und in Gegenwart der den Kat⊕ zugrundeliegenden Amine in Wasser auf Gammasäure kuppelt. Das Verfahren ist z. B. in der EP-A 270 003 beschrieben.

Es ist auch möglich, eine Reaktionslösung, die praktisch frei ist von Fremdsalzen, wie sie beispielsweise gemäß der EP-A-270 003 durch Diazotierung mit Salpetrigsäureestern erhalten wird, gegebenenfalls nach Zugabe weiterer obengenannter Stoffe, der erfindungsgemäßen Anwendung zuzuführen.

Die Ink-Jet-Tinten ergeben Drucke mit vorteilhaften anwendungstechnischen Eigenschaften, z. B. günstigen Wasser-, Licht- und Abriebechtheiten.

Die folgenden Beispiele sollen die Erfindung näher erläutern. Bei den Angaben in Teilen handelt es sich um Gewichtsteile.

### Beispiel 1

74,1 Teile 4,4'-Diaminostilben-2,2'-disulfonsäure und 300 Teile Wasser wurden bei Raumtemperatur verrührt und tropfenweise im Verlauf von etwa zwei Stunden mit 36 Teilen 1,3-Bis(nitrosyloxy)-2,2'-dimethylpropan versetzt. Nach dreistündigem Rühren zerstörte man den verbliebenen Nitritüberschuß mit geringen Zusätzen von Amidosulfonsäure.

Die erhaltene Suspension ließ man sodann in eine aus 300 Teilen Wasser, 95,7 Teilen 1-Hydroxy-7-aminonaphthalin-3-sulfonsäure und 140 Teilen Diethylethanolamin bereitete Lösung bei 20 bis 30°C unter gutem Rühren innerhalb von 30 Minuten einlaufen. Mit 50 Teilen Wasser wurde das Diazotiergefäß nachgespült. Durch Wasserzusatz stellte man den ausgekuppelten Ansatz auf eine Gesamtmenge von 1250 Teilen ein. Man erhielt so eine lagerfähige Lösung des Farbstoff der Formel I, die selbst bei -5°C nicht kristallisierte. Farbstoffgehalt: 21,4%

### Beispiel 2

Arbeitete man wie in Beispiel 1, verwendete aber zur Kupplung nur 47 Teile Diethylethanolamin und 119 Teile Triethanolamin, so erhielt man eine lagerfähige Lösung, die beim Abkühlen bis in die Nähe des Gefrierpunktes stabil blieb.

### Beispiel 3

Arbeitete man wie in Beispiel 1, verwendete aber zur Kupplung 193 Teile Butyldiethanolamin, so erhielt man eine lagerfähige Lösung des Farbstoffs der Formel I, die selbst bei -5°C nicht kristallisierte. Farbstoffgehalt: 24,3 %

### Beispiel 4

Arbeitete man wie in Beispiel 3, verwendete aber zur Kupplung nur 65 Teile Butyldiethanolamin und 119 Teile Triethanolamin, so erhielt man eine lagerfähige Lösung, die beim Abkühlen bis in die Nähe des Gefrierpunktes stabil blieb.

## Patentansprüche

1. Verwendung von wäßrigen, flüssigen Farbstoffkonzentraten, die 15 bis 35 Gew.-%, bezogen auf das Gewicht des Konzentrates, an Farbstoff enthalten, wobei 90 bis 100 Gew.-% der Farbstoffmenge aus dem Farbstoff der Formel I 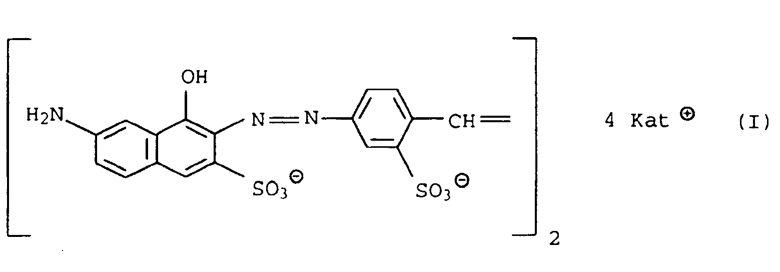 bestehen, in der Kat^{⊕} das Äquivalent eines tertiären Alkylalkanolammoniumkations bedeutet, im Ink-Jet-Verfahren.

2. Verfahren zum Bedrucken eines Substrats mit einer Tinte unter Anwendung des Ink-Jet-Verfahrens, **dadurch gekennzeichnet, daß** man eine Tinte verwendet, die aus einem Farbstoffkonzentrat gemäß Anspruch 1 erhalten wurde.

## Claims

1. The use of aqueous liquid dye concentrates comprising, based on the weight of the concentrate, from 15 to 35% by weight of a dye quantity, from 90 to 100% by weight of the dye quantity consisting of the dye of the formula I 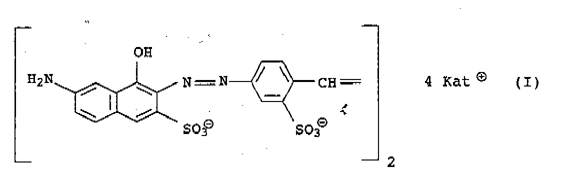 where Kat⊕ is the equivalent of a tertiary alkylalkanolammonium cation, in the inkjet process.

2. A process for printing a substrate with an ink using the inkjet process, which comprises using an ink obtained from a dye concentrate as set forth in claim 1.

## Revendications

1. Utilisation de concentrés de colorants liquides et aqueux, contenant 15 à 35% en poids de colorants, par rapport au poids du concentré, où 90 à 100% en poids de la quantité de colorants est constituée du colorant de formule I 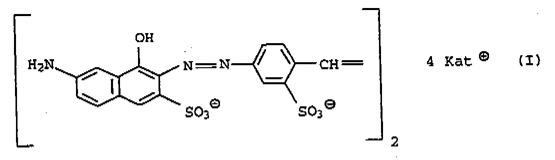 dans laquelle Kat^{⊕} représente l'équivalent d'un cation alkylalcanolammonium tertiaire, dans un procédé à jet d'encre.

2. Procédé d'impression d'un substrat avec une encre par utilisation d'un procédé à jet d'encre, **caractérisé en ce que** l'on utilise une encre obtenue à partir d'un concentré de colorants selon la revendication 1.
